# EUROPÄISCHE PATENTANMELDUNG

(11) **EP 1 253 705 A2**
(43) Veröffentlichungstag der Anmeldung: **30.10.2002**
(21) Anmeldenummer: 02008504.9
(22) Anmeldetag: 15.04.2002
(51) Int. Cl.: H02M 5/257, H02M 5/293

(54) **Zweileiternetzteil zur Stromversorgung eines ein Schaltelement elektronisch steuernden Schalters in einer Hausinstallation**

(30) Priorität: 26.04.2001 DE 10120572
(71) Anmelder: SIEMENS AKTIENGESELLSCHAFT, 80333 München (DE)
(72) Erfinder: Zirkl, Siegmar, 93051 Regensburg (DE)

(57) **Zusammenfassung**

Das Zweileiternetzteil besteht aus einem ersten Netzteil(11, 10), dessen Eingang parallel zum Schaltelement(3) liegt und aus einem zweiten Netzteil mit einem Stromwandlertransformator(4), dessen Primärwicklung(5) in Serie zu dem Schaltelement(3) und der Last liegt. Durch Betrieb des Stromwandlertransformators(4) im Bereich der magnetischen Sättigung erreicht man ein kleines Bauvolumen in Verbindung mit geringer Verlustleistung und weitgehende Unabhängigkeit der Leistungsübertragung von der Belastung im Zweileiterkreis.

## Beschreibung

Zweileiternetzteil zur Stromversorgung eines ein Schaltelement elektronisch steuernden Schalters in einer Hausinstallation

Die vorliegende Erfindung betrifft ein Zweileiternetzteil zur Stromversorgung eines ein Schaltelement elektronisch steuernden Schalters einer Hausinstallation mit kleinem Bauvolumen und geringer Verlustleistung aus einem ersten Netzteil, dessen Eingang parallel zum Schaltelement liegt, und aus einem zweiten Netzteil mit einem Stromwandlertransformator, dessen Primärwicklung in Serie zu dem Schaltelement und der zu schaltenden Last liegt.

In modernen Installationsanlagen werden in zunehmendem Umfang elektronische Bauteile verwendet, die einer Stromversorgung bedürfen. Die erforderliche Stromversorgung erfolgt entweder über einen Datenbus oder direkt vom Netz mittels eines Netzteils mit einem Transformator oder einem primärgetaktetem Schaltnetzteil.

Sollen jedoch in einer bestehenden Installation konventionelle Installationsschalter durch elektronische Schalter ersetzt werden, so ergibt sich das Problem, dass in den Schalterdosen meist der Nullleiter fehlt (Zweileitersystem). Man benötigt dann ein Zweileiternetzteil, das ohne Nullleiter auskommt. Im ausgeschaltetem Zustand erfolgt die Stromversorgung der Elektronik des Schalters über die Last, im eingeschalteten Zustand wird mittels Phasenanschnitt- bzw. Phasenabschnittsteuerung eines elektronischen Schaltelements (z.B. Triac, MOSFET) die Last nicht ganz voll über die ganze Sinushalbwelle aufgesteuert, so dass die Restenergie der Elektronik zukommt. Ein solches Zweileiternetzteil hat jedoch viele Nachteile. So entsteht im elektronischen Schalter durch statische und dynamische Verluste eine hohe Verlustleistung. Mit Rücksicht auf die begrenzte Wärmeabgabe in einer Schalterdose, insbesondere einer Unterputzdose, darf daher bei einem solchen Netzteil die zu schaltende Last nicht größer als 400 W sein. Die erforderliche Netznulldurchgangserkennung und die Aufbereitung des Phasenanschnitts bzw. Phasenabschnitts bedeutet einen hohen Aufwand für die Elektronik. Ferner erzeugt ein solches Netzteil hohe Störspannungen, zu deren Beseitigung großvolumige Entstörelemente verwendet werden müssen. Schließlich ergeben sich Probleme mit induktiven Lasten.

Aus der US-Patentschrift 5 831 349 ist bereits ein Zweileiternetzteil bekannt, das für die Stromversorgung eines elektronischen Schalters im eingeschalteten Zustand einen Stromwandlertransformator verwendet Der Transformator ist so dimensioniert, dass er unterhalb der induktiven Sättigung arbeitet. Der Transformator muss hierbei so dimensioniert werden, dass er einerseits bei einer minimalen zu schaltenden Last eine zur Stromversorgung des elektronischen Schalters ausreichende Leistung überträgt und andererseits die bei einer maximalen Last auftretende hohe Stromstärke verträgt. Sollen Lasten von 400 W und mehr geschaltet werden, so ergeben sich Transformatorquerschnitte, die eine Unterbringung in üblichen Schalterdosen ausschließen. Ferner steigt die Spannung im Sekundärkreis des Transformators proportional zu dem Anstieg des Stroms im Zweileiterkreis, sodass eine Reglerelektronik mit einem breiten Spannungsbereich verwendet werden muss. Eine solche Reglerelektronik ist mit Halbleiterbauelementen nur aufwändig zu realisieren. Eine Begrenzung, z.B. mit einer Begrenzerdiode beschert bei hoher Last eine hohe Verlustleistung, die als Wärme aus der Schalterdose abgeführt werden muss.

Der vorliegenden Erfindung liegt daher die Aufgabe zu Grunde, ein Zweileiternetzteil anzugeben, das für die Unterbringung in einer Unterputz-Schalterdose üblicher Bauart geeignet ist und daher kleines Bauvolumen mit geringer Verlustleistung auch bei relativ hoher Last verbindet.

Die Erfindung löst diese Aufgabe ausgehend von einem Zweileiternetzteil der eingangs genannten Art dadurch, dass erfindungsgemäß der Stromwandlertransformator derart dimensioniert ist, dass er im Bereich der magnetischen Sättigung betrieben wird.

Um die Verluste im Eisenkern des Transformators gering zu halten, verwendet man ein sehr hochwertiges Kernmaterial, vorzugsweise in Form eines hochwertigen Eisen-Ringkerns.

Bei einem derart dimensionierten Transformator bricht die Leistungsübertragung im Moment der Eintritt in die Sättigung schlagartig ab. Das entspricht im Sekundärkreis praktisch einem Phasenabschnitt. im Primärkreis wirkt jetzt im Wesentlichen nur noch der ohmsche Widerstand der Primärwicklung, somit bleiben die Verluste im Zweileiterkreis relativ gering.

Vorteilhafter Weise wird der Stromwandlertransformator derart dimensioniert, dass bereits bei einer definierten minimalen Last im Zweileiterkreis die magnetische Sättigung erreicht wird. Schon während des Anstiegs bzw. Abstiegs der Sinushalbwellen des Stroms nach dem Nulldurchgang, also noch vor dem jeweiligen Amplitudenmaximum tritt die Begrenzung ein.

Erhöht sich die Belastung im Zweileiterkreis, so steigt der Stromfluss durch die Primärwicklung an, die Sinuskurve des Stromflusses wird steiler. Dadurch nimmt auch die Spannungsamplitude des Impulses im Sekundärkreis zu, jedoch tritt die Sättigung früher ein. Im Sekundärkreis entsteht der Phasenabschnitt somit früher. Die Impulse haben zwar eine größere Amplitude aber eine geringere Breite, sodass der Energieinhalt annähernd konstant bleibt. Die geringe Zunahme kann, wenn gewünscht, durch zusätzliche elektronische Begrenzungsmittel, insbesondere eine Begrenzerdiode ausgeglichen werden.

Unter energetischen Gesichtspunkten ist es von Vorteil für die Stromversorgung der Elektronik eine Zweiweggleichrichtung der erzeugten Impulse vorzunehmen.

Das erfindungsgemäße Zweileiternetzteil verbindet eine Reihe von Vorteilen, die es für den vorgesehenen Verwendungszweck hervorragend geeignet erscheinen lassen. Es verbindet ein kleines Bauvolumen mit geringer Verlustleistung und fast konstanter Leistungsübertragung im Belastungsbereich des Zweileiterkreises. Ferner erlaubt es den Betrieb an allen in der Installationstechnik üblichen Lastarten, z.B. auch an induktiver Last. Schließlich kann es sowohl in Verbindung mit einem Halbleiterschalter wie auch mit einem Relais verwendet werden.

Zur weiteren Erläuterung der Erfindung wird auf die Figuren Bezug genommen.
FIG 1 zeigt ein Oszillogramm des Stroms und der Spannung in einem Ringkerntransformator bei einer Belastung im Zweileiterkreis mit 60 W;
FIG 2 zeigt ein Oszillogramm des Stroms und der Spannung in einem Ringkerntransformator bei einer Belastung im Zweileiterkreis mit 660 W;
FIG 3 zeigt ein Ausführungsbeispiel der Erfindung.

Zum Nachweis der Richtigkeit des beschriebenen Funktionsprinzips wurde ein hochwertiger Ringkern (Ø33×7,5mm; relative Anfangspermeabilität µ_{R} ca. 100.000) mit entsprechenden Wicklungen versehen. Der Ringtransformator war nicht an einen Gleichrichter angeschlossen, wurde jedoch sekundär mit einem Widerstand belastet.

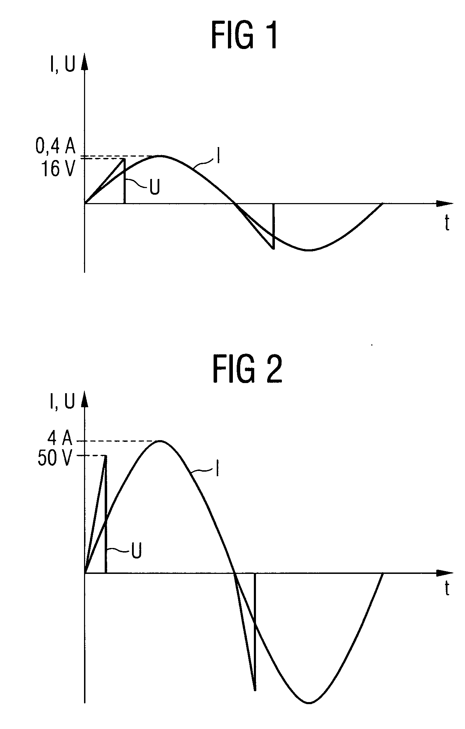

In den FIG 1 und 2 sind jeweils Oszillogramme des Stromflusses I im Zweileiterkreis und der Spannung U im Sekundärkreis dargestellt.

In FIG 1 betrug die Belastung im Zweileiterkreis 60W ( I ≈ 0,4Aₛ ); im Sekundärkreis wurde eine Widerstandslast auf 100mW (RMS) eingestellt. Der Phasenabschnitt betrug ca.22°, die Amplitude der Sekundärspannung U ≈ 16Vₛ.

In FIG 2 betrug die Belastung im Zweileiterkreis 660W (I ≈ 4Aₛ); die im Sekundärkreis auf dieselbe Widerstandslast abgegebene Leistung erhöhte sich nur auf ca. 250mW (RMS). Der Phasenabschnitt geht zurück auf etwa 10°, die Amplitude der Sekundärspannung erhöhte sich auf U ≈ 50V_{S}.

Bei hoher Last im Zweileiterkreis erhöht sich die Leistungsabgabe im Sekundärkreis nur um ca. den Faktor 2,5. Eine zusätzliche Spannungsbegrenzung durch eine Begrenzerdiode erhöht die Verlustleistung nur unwesentlich um ca. 150mW. Die wesentliche Verlustleistung entsteht im ohmschen Widerstand der Primärwicklung. Temperaturmessungen ergaben bei 660W Dauerlast ca. 65°C für den gesamten Stromwandlertransformator.

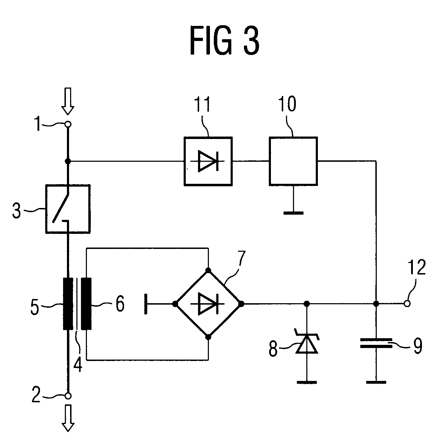

Das in FIG 3 dargestellte Ausführungsbeispiel der Erfindung zeigt ein Schaltelement 3 in einem Zweileiterkreis. Über Klemme 1 erfolgt die Verbindung mit der Phase (Einspeisung), während Klemme 2 mit der zu schaltenden Last verbunden ist. In Serie zu dem Schaltelement 3 liegt die Primärwicklung 5 des Stromwandlertransformators 4. Die Sekundärwicklung 6 des Stromwandlertransformators 4 ist mit dem Gleichrichter 7 verbunden. Die Ausgangsspannung des Gleichrichters 7 wird unter Zwischenschaltung einer Begrenzerdiode 8 und eines Speicherkondensators dem Ausgang 12 zugeleitet. Da der Stromwandlertransformator 4 zusammen mit dem angeschlossenen Gleichrichter 7 nur bei Stromfluss im Zweileiterkreis Leistung abgibt, ist zusätzlich zur Stromversorgung einer Elektronik im Falle der Abschaltung des Zweileiterkreises ein "Spannungsnetzteil" bestehend aus dem Gleichrichter 11 und dem Schaltnetzteil 10 vorgesehen, dessen Eingang parallel zum Schaltelement 3 liegt und dessen Ausgang mit dem Ausgang 12 des "Stromnetzteils" gebildet aus dem Stromwandlertransformator 4 und dem Gleichrichter 7 verbunden ist. Die Leistung dieses "Spannungsnetzteils" 10,11 sollte gleich der Leistung des "Stromnetzteils" 4,7 gewählt werden, es sei denn die Elektronik benötigt für die beiden Schaltzustände EIN/AUS im Zweileiterkreis unterschiedliche Leistung. Zur Erzielung eines kleinen Bauvolumens kann das Schaltnetzteil 10 als einfaches primärgetaktetes Schaltnetzteil ausgeführt werden.

Die durchgeführten Versuche ergaben eine hervorragende Eignung des erfindungsgemäßen Zweileiternetzteils für den vorgesehenen Einsatz. Für Leistungen im Bereich von 60W bis 660W kann ein Ringkern mit den Abmessungen von ca. Ø38×14mm für den Stromwandlertransformator verwendet werden, weitere Entstörelemente sind nicht erforderlich. Die Endtemperatur des Stromwandlertransformators stellt sich bei 660W auf 65°C ein. Zweileiternetzteile mit den Gestaltungsmerkmalen der Erfindung sind für Leistungen bis zu 1000W im Zweileiterkreis mit ausreichend geringem Bauvolumen und ausreichend geringer Verlustleistung realisierbar, um sie in einer üblichen Schalterdose unterbringen zu können.

Als kostengünstige Lösung bietet sich für den Stromwandlertransformator auch ein Spartransformator an. Eine Isolation zum Netzspannungspotential ist dann nicht gegeben, auch muss auf Kurzschlussfestigkeit geachtet werden, da im Kurzschlussfall des Zweileiterkreises hohe Ströme auf den nachfolgenden Gleichrichter übertragen werden können.

Das erfindungsgemäße Zweileiternetzteil kann auch für Dimmer verwendet werden. Es ist hierbei jedoch erforderlich den regelbaren Phasenwinkel des Dimmers mit dem hier benötigten Phasenabschnittswinkel zur Energieentnahme zu korrelieren.

## Patentansprüche

1. Zweileiternetzteil zur Stromversorgung eines ein Schaltelement elektronisch steuernden Schalters in einer Hausinstallation mit kleinem Bauvolumen und geringer Verlustleistung, aus einem ersten Netzteil, dessen Eingang parallel zum Schaltelement liegt und aus einem zweiten Netzteil mit einem Stromwandlertransformator, dessen Primärwicklung in Serie zu dem Schaltelement und der zu schaltenden Last liegt, **dadurch gekennzeichnet,dass** der Stromwandlertransformator(4) derart dimensioniert ist, dass er im Bereich der magnetischen Sättigung betrieben wird.

2. Zweileiternetzteil nach Patentanspruch 1, **dadurch gekennzeichnet, dass** der Stromwandlertransformator(4) derart dimensioniert ist, dass er bereits bei einer definierten minimalen Last im Zweileiterkreis in der magnetischen Sättigung betrieben wird.

3. Zweileiternetzteil nach Patentanspruch 1 oder 2, **dadurch gekennzeichnet, dass** im Sekundärkreis(6) des Stromwandlertransformators(4) eine Begrenzerdiode(8) angeordnet ist.

4. Zweileiternetzteil nach einem oder mehreren der Patentansprüche 1 bis 3, **dadurch gekennzeichnet, dass** als Stromwandlertransformator(4) ein Ringkerntransformator verwendet wird.

5. Zweileiternetzteil nach einem oder mehreren der Patentansprüche 1 bis 4, **dadurch gekennzeichnet, dass** der Stromwandlertransformator(4) als Spartransformator ausgebildet ist.

6. Zweileiternetzteil nach einem oder mehreren der Patentansprüche 1 bis 5, **dadurch gekennzeichnet, dass** der mit Strom zu versorgende Schalter ein Dimmer ist.
